Europäisches Patentamt

European Patent Office

Office européen des brevets

(11) Publication number: **0 297 149**
**A1**

(12) # EUROPEAN PATENT APPLICATION

(21) Application number: 87109269.8

(22) Date of filing: 27.06.87

(51) Int. Cl.⁴: **B01D 57/02** , **G01N 27/26** ,
**G01N 33/487**

(43) Date of publication of application:
04.01.89 Bulletin 89/01

(84) Designated Contracting States:
DE GB NL

(71) Applicant: **Hewlett-Packard GmbH**
**Herrenberger Strasse 110**
**D-7030 Böblingen(DE)**

(72) Inventor: **Hupe, Klaus-Peter, Dr.**
**Zeppelinstrasse 8**
**D-7570 Baden-Baden(DE)**
Inventor: **Frei, Roland Walter, Prof.**
**Warmondstraat 175 III**
**NL-1058 KX Amsterdam(NL)**
Inventor: **Kok, Wilhelmus Theodorus, Dr.**
**Camera Obscuralaan 342**
**NL-1183 KH Amstelveen(NL)**

(74) Representative: **Schulte, Knud, Dipl.-Ing.**
**c/o Hewlett-Packard GmbH Europ. Patent-**
**und Lizenzabteilung Postfach 1430**
**Herrenberger Strasse 130**
**D-7030 Böblingen(DE)**

(54) **Method and apparatus for separating mixtures of substances.**

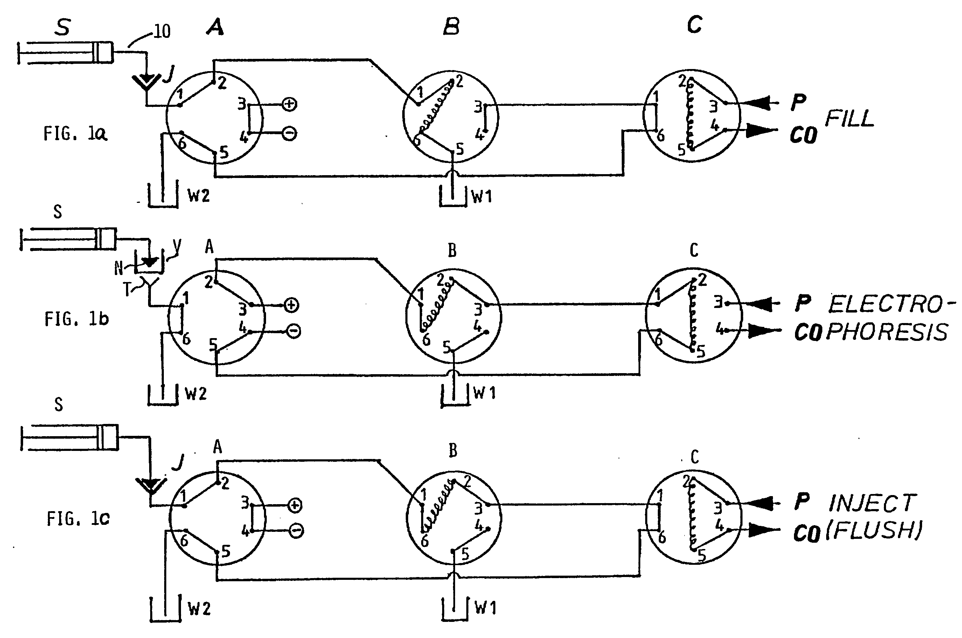

(57) In a method for the separation of a mixture of substances with the mixture comprising sample substances the composition of which is to be analyzed and a matrix of substances wherein the sample substances are contained and which is not of interest for the analysis, the mixture is first injected by a syringe (S) into a tube system comprising rotary six port switching valves (A,B,C). In a second step (Fig. 1b), the mixture undergoes capillary electrophoresis so that the matrix is separated from the sample substances. In a third step (Fig. 1c), the separated sample substances are transferred to a liquid chromatograph where the sample substances are separated from each other for quantitative analysis.

FIG. 1a  FIG. 1b  FIG. 1c

# METHOD AND APPARATUS FOR SEPARATING MIXTURES OF SUBSTANCES

The invention relates to a method and to an apparatus for separating mixtures of substances, in particular substances which are contained in a matrix of biological molecules.

A known method of separating substances is liquid chromatography. If the substances which are to be separated are contained in a matrix of other substances which are not of interest for the specific analysis, a considerable amount of work and time for the sample preparation will be required. Typical examples for this are the determination of drugs and the metabolites thereof as well as body substances in serum, urine, or other body fluids or the determination of plant-protective agents or of fertilizer residues in food. In these cases, the matrix consists of proteins, lipids and/or carbohydrates, partially in a conglomerated state. The matrix molecules are difficult to treat by chromatography because of the long retention time; furthermore, in the detection, they interfere with the substances to be determined so that the quantitative analysis is adversely affected. It is therefore necessary to separate the matrix molecules from the substances to be analyzed before the chromatographical process is performed.

Known methods for separating the matrix from the sample substance are precipitation, liquid-liquid extraction, liquid-solid extraction and centrifugation. All of these methods are time-consuming and laborious and difficult to automate. Often, one has to work with an internal standard in order to achieve an acceptable dynamic range and to ensure a quantitative analysis.

As compared to these methods, the introduction of the "pre-column" technology was a substantial progress. According to this technology, a pre-column is provided which lets the matrix pass and which retains the molecules to be determined. After the matrix has passed, it is switched over such that the pre-column is connected to the main column of the liquid chromatograph and the separation of the sample molecules to be determined takes place in the main column. This method is also not without problems because the matrix comes into contact with the stationary phase of the pre-column and is partially absorbed by it irreversibly, and the pre-column is a source of band-broadening for the sample substances leading to a degradation of the separation efficiency which can only be compensated by rather elaborate methods (peak compression). Furthermore, it is not always possible to separate all the matrix molecules from the sample so that a portion of the matrix reaches the main column where it causes changes in the retention performance and finally leads to clogging of the column.

Relative to this prior art, it is the object of the invention to provide a method and a corresponding apparatus for separating sample substances contained in a matrix of other substances which is less susceptible to contamination and which avoids the interference of sample substances with the matrix.

According to the invention, this object is solved for a method by the features of claim 1 and for an apparatus by the features of claim 5.

The invention is based on the recognition that the substantial differences in the electrophoretical mobilities between the matrix molecules and the sample molecules can be used for separating the matrix from the sample by application of an electric field, and that this electrophoretical separation can advantageously be combined with a subsequent separation of the sample molecules by liquid chromatography. The invention has the additional advantage that by appropriate adjustment of the pH value of the electrophoretic environment the velocity of the molecules and the direction of their movement can be adjusted such that in addition to the separation of the matrix from the sample, a pre-separation of the sample substances can be achieved in the electrophoretic separation step. It is of particular advantage that the separation method according to the invention can be performed using conventional components of liquid chromatography, such as rotary valves, syringe, needle and seat, which are oftentimes anyhow present in a liquid chromatograph.

According to claim 2, the step of separating the matrix from the sample substances can be performed by using capillary electrophoresis. In claim 4, some applications are indicated for which the invention is particularly suited.

According to claim 6, a syringe can be used as a simple means for moving the mixture inside a tube system, for transferring the sample to a liquid chromatograph, and for removing the matrix.

According to claim 7, the switching over between the various steps of the invention can be performed in an uncomplicated way by using rotary valves.

Additional advantages of the invention are that the sample can be analyzed without further pretreatment and that the method ensures careful treatment of the sample. Furthermore, the apparatus for performing the method of the invention is insensitive to contamination and the matrix does not contact any adsorbing surfaces. The method can also be used for strongly ionic substances. There is only minimal dilution during the separation process. The process of the invention can easily be automated.

It is understood that for the electrophoretical separation step a variety of methods can be employed such as carrier-free capillary electrophoresis, or isoelectric focusing, or isotachophoresis and that for the subsequent chromatographic analysis any of the known chromatographic separation processes could be used.

Subsequently, an embodiment of the invention is explained with reference to the drawing.
Figures 1a to 1c illustrate the operation of an apparatus according to the invention with three process steps shown in Fig. 1a, 1b, 1c, respectively.

According to Figure 1a, the apparatus for performing the method of the invention comprises a syringe S connected via a conduit 10 to a needle and seat arrangement J and three six port valves A,B, and C, each valve having six ports labelled with the reference numerals 1 to 6. The tube connections between the various elements of the apparatus are as follows:
The needle and seat arrangement is connected to port 1 of the valve A, port 2 of valve A is connected to port 1 of valve B, port 2 of valve B is connected to port 6 via a loop, illustrated by a helical line, port 3 of valve B is connected to port 1 of valve C, port 6 of valve C is connected to port 5 of valve A. Port 6 of valve A and port 5 of valve B are connected to waste containers W2 and WI, respectively. Ports 2 and 5 of valve C are connected via a loop indicated by a helical line. Port 3 of valve C is connected to a pump (not shown) via a tube P and port 4 is connected to a chromatographic separation column (not shown) via a conduit CO.

The syringe S, the needle and seat combination J, the six port valves A, B, and C as well as the pump and the separation column are conventional components which are used in state of the art liquid chromatographs, for example in the Hewlett-Packard Liquid Chromatograph Model No. HP 1090A (see Hewlett-Packard publication GE 12-5959-0844, 1986), but in a different combination and for a different purpose.

The ports 3 and 4 of valve A are connected via conduits to the positive and negative electrodes of a d.c. supply source, illustrated by the symbols + and - , respectively. An electrically conductive connection is established by an appropriate electrolyte inside the conduits connected to ports 3 and 4. The six port valves A,B,C and the interconnecting conduits are made of electrically non-conductive material; the tubes between the valves may consist of teflon capillaries having an inner diameter of 0.5 mm.

In the following, an example of the separation process according to the invention is explained with reference to the three successive steps illustrated in Figures 1a, 1b, 1c, respectively and labelled as "FILL", "ELECTROPHORESIS", and "INJECT" (FLUSH) " .

In the "FILL" step shown in Figure 1a, the needle and seat combination is sealingly closed such that a connection between the syringe S and the valve A is established. The sample liquid comprising the substances to be analysed in a matrix has been aspirated into the syringe in a previous step and is now pushed into the sample loop by moving the piston of the syringe accordingly. Any excess liquid reaches the waste container WI.

After the sample liquid has been moved into the loop between ports 2 and 6 of valve B, the valves are switched into the new positions shown in Figure 1b. The needle N can be lifted from the seat T and dip into a vessel V for taking in an electrolyte or a solvent. In the process step according to Figure 1b, labelled as "ELECTROPHORESIS" , the positive pole of the d.c. source, the sample filled loop between ports 2 and 6 of valve B , the loop between ports 2 and 5 of valve C and the negative pole of the d.c. source are serially connected through the electrolyte inside the conduits such that an electrophoretic separation process can take place for substances which have a corresponding electrophoretic mobility. Under the influence of the electric field generated by the d.c. source, such electrophoretically mobile substances are moving from the loop between ports 2 and 6 of valve B towards the loop between ports 2 and 5 of valve C. Substances which are moving slowly or which are immobile remain in the loop between ports 2 and 6 of valve B or move only to an insubstantial amount beyond this loop. The actual electrophoretic separation line is between port 2 of valve B and port 2 of valve C. The electrophoretic parameters, in particular the voltage, the polarity of the voltage, the duration of the time interval during which the voltage is applied and the pH value of the electrolyte have to be adapted to the conditions of the specific sample to be analyzed.

In the following step "INJECT (FLUSH)" shown in Figure 1c, the valve C is switched over such that the loop between ports 2 and 5 is connected to a chromatographical system and the sample can be transferred under the action of a pump into a separation column wherein the sample is separated and subsequently detected by a detector, for example a UV absorption detector, or any other detector suitable for liquid chromatography. In the "INJECT" mode, the remaining conduit system between valves A, B, and C can be rinsed using the syringe S. In particular, the matrix portion which has been separated in the electrophoretic step (Figure 1b) from the sample molecules of interest, can be transferred into the container W2. Thereafter, the apparatus is ready for the next pre-separation step. The process is fully automated.

According to a practical example, the method of the invention can be employed for determining creatin and creatinine in urine or in blood. Creatin and creatinine are important metabolites the concentration of which in blood or urine gives an indication of the functioning of the kidneys. The classical method for determining creatin is the Jaffe reaction which, however, due to interferences with other substances, typically gives too high quantitative results. Utilizing liquid chromatography, the substances to be determined can be separated from the interfering substances, but an elaborate sample preparation is still required (precipitation and centrifugation).

When employing the method according to the invention, creatin and creatinine in urine can be separated whereby the chromatogram is free of interfering matrix substances, such as proteins, carbohydrates and lipids. When, in the electrophoretic separation step, a voltage of about 1250 V is applied for about 16 minutes, creatin and creatinine are well separated in the chromatogram and precise quantitative determination of creatin becomes possible.

Other examples, wherein the invention can be advantageously used are the separation and determination of adrenaline and noradrenaline in blood or urine and the separation and determination of salicylic acid in blood plasma. Generally, the invention can also be advantageously used in cases where drugs contained in a matrix of bio-polymers, e.g. proteins, carbohydrates, lipids, are to be determined.

It is understood that the method according to the invention can not only be performed by an apparatus as shown in Figures 1a-c , but that various modifications thereof are possible. One could, for example, use only two interconnected six port valves with the first valve being connected to the pump and the column of the chromatograph and the second valve being connected to the d.c. source and to a loop wherein the electrophoretic separation would take place.

## Claims

1. Method for the separation of mixtures of substances with the mixtures comprising sample substances the composition of which is to be analyzed and a matrix of substances wherein the sample substances are contained, the method comprising the steps of:

a) applying a d.c. voltage to the mixtures such that the matrix substances are spatially separated from the sample substances due to differences in the electrophoretic mobility between the matrix substances and the sample substances, and

b) removing the separated sample substances from the matrix substances, and

c) chromatographically separating the sample substances.

2. Method as in claim 1 wherein the step of applying a d.c. voltage comprises: subjecting the mixtures to capillary electrophoresis using an appropriate electrolyte.

3. Method as in claim 2 wherein the electrophoretic parameters (electrolyte, d.c.voltage, time of application of the voltage) are selected such that during the application of the voltage a preseparation of the sample substances is achieved in addition to the separation of the matrix from the sample substances.

4. Use of the method according to claim 1 or 2 for separating pharmaceuticals and/or the metabolites thereof contained in body fluids, for example in blood or in urine, or for separating plant protective agents or fertilzer residues contained in food.

5. Apparatus for the separation of mixtures of substances with the mixtures comprising sample substances the composition of which is to be analyzed, and a matrix of substances wherein the sample substances are contained, the apparatus comprising an arrangement for performing liquid chromatography, characterized by the following features:

a) a capillary system which can be coupled on one side to the arrangement for performing liquid chromatography,

b) pumping means (S) for taking in the mixtures into the capillary system and for moving the mixtures inside the capillary system,

c) a d.c. source which can be coupled to the capillary system for electrophoretically separating the matrix from the sample substances,

d) means for removing the separated sample substances from the matrix and for transferring the sample substances to the arrangement for performing liquid chromatography.

6. Apparatus according to claim 5, characterized in that the pumping means comprise a syringe (S) for drawing in the mixtures to be separated, for moving the mixtures in the tube system to a position where the matrix is electrophoretically separated from the sample substances, for ejecting the separated matrix into a waste container (W2) and for transferring the separated sample substances to the arrangement for performing liquid chromatography.

7. Apparatus according to claim 5 or 6, characterized in that at least two six port valves (A;B;C) connected via electrically non-conductive capillaries are provided which can be switched over for selectively coupling the tube system to

    a) containers for storing the mixtures to be separated or other liquids (electrolytes, solvents),

    b) the d.c. source ,

    c) a sample loop (C 2,5) for receiving the separated sample substances which are to be transferred to the arrangement for performing liquid chromatography.

FIG. 1a

FIG. 1b

FIG. 1c

EP 0 297 149 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.3) |
|---|---|---|---|
| X | CHEMICAL ABSTRACTS, vol. 103, no. 3, 22nd July 1985, page 295, abstract no. 19322y, Columbus, Ohio, US; X.C. CHEN et al.: "Electrophoretic elution of Coomassie-blue stained protein from polyacrylamide gels and its chromatographic analysis", & BUNSEKI KAGAKU 1985, 34(3), 137-142 | 1 | B 01 D 57/02<br>G 01 N 27/26<br>G 01 N 33/487 |
| Y | * idem * | 2,3 | |
| Y | CHEMICAL ABSTRACTS, vol. 100, no. 25, 18th June 1984, pages 279-280, abstract no. 206034f, Columbus, Ohio, US; T. TSUDA et al.: "Separation of nucleotides by high-voltage capillary electrophoresis", & J. APPL. BIOCHEM. 1983, 5(4-5), 330-336 | 2,3 | |
| A | PATENT ABSTRACTS OF JAPAN, vol. 7, no. 96 (P-193)[1241], 22nd April 1983; & JP - A - 58 21553 (SHIMAZU SEISAKUSHO K.K.) 08-02-1983 <br>* abstract * | 5-7 | TECHNICAL FIELDS SEARCHED (Int. Cl.3)<br><br>B 01 D 57/02<br>B 01 D 15/08<br>G 01 N 27/26<br>G 01 N 33/48 |
| A | PATENT ABSTRACTS OF JAPAN, vol. 7, no. 96 (P-193)[1241], 22nd April 1983; & JP - A - 58 21552 (SHIMAZU SEISAKUSHO K.K.) 08-02-1983 <br>* abstract * | 5-7 | |
| A | US-A-3 553 097 (J. BUCHLER) <br>* claims * | 5-7 | |

The present search report has been drawn up for all claims

| Place of search | Date of completion of the search | Examiner |
|---|---|---|
| BERLIN | 10-02-1988 | CORDERO ALVAREZ M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P0401)